# EUROPÄISCHE PATENTSCHRIFT

(11) **EP 1 521 688 B1**
(45) Veröffentlichungstag und Bekanntmachung des Hinweises auf die Patenterteilung: **14.09.2011**
(21) Anmeldenummer: 03763770.9
(22) Anmeldetag: 09.07.2003
(51) Int. Cl.: B60C 23/00, B60T 8/1755

(54) **Verfahren zum Regeln des Fahrverhaltens eines Fahrzeugs**
Method for controlling the behaviour of a vehicle
Procédé pour régler le comportement routier d'un véhicule

(30) Priorität: 10.07.2002 DE 10230967
(43) Veröffentlichungstag der Anmeldung: 13.04.2005
(73) Patentinhaber: Continental Teves AG & Co. oHG, 60488 Frankfurt am Main (DE)
(72) Erfinder: GRONAU, Ralph, 35083 Wetter (DE); WOYWOD, Jürgen, 64546 Mörfelden (DE)
(86) Internationale Anmeldenummer: PCT/EP2003/007408
(87) Internationale Veröffentlichungsnummer: WO 2004/007235

(56) Entgegenhaltungen:
- WO-A-01/08908
- WO-A-01/08908
- WO-A1-02/057099
- DE-A- 4 014 561
- DE-A- 4 014 561
- DE-A1- 4 201 146
- DE-A1- 19 857 394
- US-A- 5 696 681
- US-A- 5 696 681
- US-A- 5 934 768
- US-A- 5 934 768
- PATENT ABSTRACTS OF JAPAN Bd. 013, Nr. 281 (M-842), 27. Juni 1989 (1989-06-27) -& JP 01 074115 A (TOYOTA MOTOR CORP; others: 01), 20. März 1989 (1989-03-20)
- PATWARDHAN S ET AL: "Theory And Experiments Of Tire Blow-out Effects And Hazard Reduction Control For Automated Vehicle Lateral Control System" 29. Juni 1994 (1994-06-29), VOL. 2, PAGE(S) 1207-1209 , XP010304351 * das ganze Dokument *
- PATWARDHAN S ET AL: "Theory And Experiments Of Tire Blow-out Effects And Hazard Reduction Control For Automated Vehicle Lateral Control System" VOL. 2, PAGE(S) 1207-1209 , XP010304351 das ganze Dokument

## Beschreibung

Die Erfindung betrifft ein Verfahren zum Regeln des Fahrverhaltens eines Fahrzeugs nach dem Oberbegriff des Anspruchs 1.

Das Verfahren dient im wesentlichen der Stabilisierung eines instabilen Fahrzustandes eines Fahrzeugs, wie z.B. eines Fahrzustandes mit kippkritischer Wankneigung um eine in Längsrichtung des Fahrzeugs orientierte Fahrzeugachse oder eines Fahrzustandes mit über- bzw. untersteuerndem Fahrverhalten oder eines Fahrzustandes mit Brems- oder Antriebsschlupf. Derartige Fahrzustände werden in Kraftfahrzeug-Regelungssystemen ausgewertet und Regelgrößen ermittelt, die zum Stabilisieren des jeweiligen Fahrzustandes beitragen.

In jüngster Zeit finden zunehmend Luftdruckwarnsysteme in Fahrzeugen immer stärkere Verbreitung. Diese Verbreitung wird vorangetrieben, durch ein stärkeres Sicherheitsbewusstsein der Kunden und/oder durch neue gesetzliche Bestimmungen (USA). Die NHTSA hat nach einer Unfallserie, die größtenteils auf schadhafte Reifen zurückgeführt worden ist, eine Studie über den Effekt von indirekt und direkt messenden Reifendruck-Kontrollsystemen erstellt. Es zeigte sich, dass beide Systeme, unabhängig von ihrer Bauart durch rechtzeitige Warnung des Fahrers, die Verkehrssicherheit entscheidend verbessern, da zu niedriger Reifendruck das Fahrverhalten in sicherheitskritischer Weise derart beeinträchtigen kann, dass die Lebensdauer der Reifen herabgesetzt und die Gefahr von Unfällen aufgrund schadhafter Reifen heraufgesetzt wird.

Abweichungen vom Soll-Druck ab etwa 0,2 bar können ausschließlich durch direkt messende Systeme wie TPMS (Tire Pressure Monitoring System) mittels Druck- und Temperatursensoren in jedem einzelnen Reifen erkannt werden. Sie erfordern jedoch wegen zusätzlicher Komponenten einen höheren Aufwand als indirekt messende Systeme, wie das Deflation Detection System (DDS). Dieses erkennt Luftdruckabweichungen ab etwa 30 Prozent auf rein rechnerischem Wege aus dem Abgleich der Raddrehzahlen. Dabei macht sich DDS den Umstand zunutze, dass sich bei sinkendem Luftdruck der Raddurchmesser verkleinert, was mit erhöhten Drehzahlen des betroffenen Rads verbunden ist. Auf diesen Drehzahlunterschieden beruht die Erkennung des Radluftdruckverlustes des Elektronischen Bremssystems EBS.

Bestehende Luftdruckwarnsysteme (TPMS, DDS) haben den Nachteil, dass die Information nur dazu genutzt wird, dem Fahrer eine Warninformation zu geben. D.h. es wird vorausgesetzt, dass der Fahrer die fahrdynamischen Auswirkungen, die ein Luftdruckverlust haben kann, richtig einschätzt und entsprechend seine Fahrweise ändert. Realisiert der Fahrer dies nicht, ist der Sicherheitsgewinn der Luftdruckwarnung nicht vorhanden.

Weiterhin werden zunehmend aktive Fahrwerkssysteme (Luftfederung, Dämpfer- und Stabilisatorregelungen) im Zuge steigender Anforderungen an Komfort und Fahrdynamik eingesetzt. Oben genannte Systeme haben ebenfalls einen entscheidenden Einfluss auf das Fahrverhalten. Treten Probleme in einem Fahrwerkssystem auf, welche die Fahrdynamik des Fahrzeugs negativ beeinflussen, wird dies auch dem Fahrer signalisiert. Die Einschätzung der Beeinträchtigung wird hier ebenfalls dem Fahrer überlassen.

Beiden Systemen ist gemeinsam, dass sie zwar eine Fehlfunktion am Fahrzeug(verminderter Reifendruck bzw. defekter oder nur noch eingeschränkt verwendbarer Aktuator des elektronisch regelbaren Fahrwerksystems) ermitteln, die Beurteilung dieser Fehlfunktion aber dem Fahrer überlassen. Dieser nimmt in quasistationären Fahrsituationen oder in unkritischen Fahrsituationen diese Fehlfunktion(en) in der Regel kaum war. Dennoch können sie in kritischen Situationen, d.h. bei instabilem Fahrzustand, in welchem im Extremfall das Fahrzeug den Vorgaben des Fahrers nicht folgt, das Fahrverhalten des Fahrzeugs derart beeinflussen, dass das Fahrzeug schlechter beherrschbar ist.

Die gattungsbildende US 5,934,768 offenbart eine Steuerung für ein Bremssystem, bei der eine Reifenabnormalitätenerkennung durchgeführt wird. Wenn in einem Reifen ein deutlich verringerter Luftdruck festgestellt wird, so wird eine Abbremsung des gegenüberliegenden Rades durchgeführt, bis das Fahrzeug hält. Falls der Druckverlust langsam erfolgt, kann auch nur ein Alarm ausgelöst werden.

Aus der US 5,696,681 ist ein Verfahren zur Steuerung von Fahrzeugbremsen nach einem Platzen eines Reifens, d.h. eines plötzlichen Druckverlusts bekannt, wobei ein Signal generiert wird, das einen geplatzten Reifen anzeigt, wobei eine gewünschte Trajektorie und eine durch das Platzen des Reifens hervorgerufene tatsächliche Trajektorie des Fahrzeugs berechnet und verglichen werden. Durch selektives Aufbringen von Bremsmoment wird die tatsächliche Trajektorie beeinflusst.

Die WO 02/057099 A1 offenbart ein Fahrzeugsteuerungssystem und ein Verfahren zur Steuerung eines Fahrzeugs, wobei kontinuierlich oder zeitweise der Reifendruck und/oder die Reifentemperatur gemessen wird, woraufhin ein charakteristisches Reifensignal erzeugt wird und ein Fahrzeugregelungssystem, wie eine Bremsschlupfregelung, eine Traktionsregelung oder eine Fahrstabilitätsregelung in Abhängigkeit von dem charakteristischen Reifensignal modifiziert wird.

Aufgabe der Erfindung ist es, die Stabilität des Fahrverhaltens eines Fahrzeugs mit EBS Steuergeräten, wie ABS, ASR (TCS), ESP, ARP etc. zu erhöhen, um damit fahrdynamisch instabilem Fahrverhalten des Fahrzeugs vorzubeugen oder instabilem Fahrverhalten entgegenzuwirken.

Erfindungsgemäß wird diese Aufgabe durch den Anspruch 1 gelöst, der die folgenden Schritte aufweist: Ermitteln des aktuellen Reifendruckverlustes, Ermitteln oder Vorhersagen eines instabilen Fahrzustandes und Modifizieren einer die Querdynamik des Fahrzeugs beeinflussenden Größe in Abhängigkeit von dem positionsindividuellen Reifendruckverlust, wenn ein instabiler Fahrzustand ermittelt oder vorhergesagt wird.

Die Größe wird erfindungsgemäß modifiziert, wenn eine Kurvenfahrt ermittelt wird. Denn insbesondere bei Kurvenfahrten treten von der Position der Fehlfunktion (verminderter Reifendruck bzw. defekter oder nur noch eingeschränkt verwendbarer Aktuator des aktiven Fahrwerksystems) abhängende fahrdynamisch asymmetrische Einwirkungen auf das Fahrverhalten auf. Dabei kann die Größe auch in Abhängigkeit vom radindividuellen Luftdruck der Reifen modifiziert werden.

Um eine Geradeausfahrt von einer Kurvenfahrt zu unterscheiden, bei der ein verminderter Reifendruck oder bei der ein Fehler des Fahrwerks zu einem fahrdynamisch kritischen instabilem Fahrverhalten des Fahrzeugs führt, ist es vorteilhaft, dass nach Maßgabe des Lenkwinkels, des Drehverhaltens der Räder und/oder des Gierwinkels ermittelt wird, an welchem Rad ein verminderter Reifendruck oder an welchem Aktuator der Fehler des Fahrwerks vorliegt. Für den Fall, dass beispielsweise ein um mindestens 30% verminderter Reifendruck vorliegt und eine Kurvenfahrt ermittelt ist, wird erfindungsgemäß die die Querdynamik beeinflussende Größe modifiziert, wenn der verminderte Reifenfülldruck an einem kurvenäußeren Rad festgestellt wurde.

Zur Erhöhung der Fahrstabilität mit einem ESP Steuergerät ist es vorteilhaft, dass die die Querdynamik beeinflussende Größe ein ein aufzubringendes Zusatzgiermoment einer Fahrstabilitätsregelung beeinflussender Wert eines Einspurmodells ist. Nach einer bevorzugten Ausbildung der Erfindung, wird der Wert des Reibwerts, der bei der Berechnung des Sollwertes der Gierwinkelgeschwindigkeit und damit zur Ermittlung des Zusatzgiermoments herangezogen wird, nach Maßgabe des verminderten Reifendrucks begrenzt.

Zur Erhöhung der Fahrstabilität mit einem ARP (Active Rollover Protection) Steuergerät ist es vorteilhaft, dass die die Querdynamik beeinflussende Größe ein einen Fahrzustand mit kippkritischer Querbeschleunigung oder Wank- bzw. Rollneigung bestimmender Schwellenwert ist, bei dessen Überschreitung ein Kippen um eine in Längsrichtung des Fahrzeugs orientierte Fahrzeugachse erfolgt. Vorteilhaft ist, dass der Schwellenwert erniedrigt wird.

Zur Erhöhung der Fahrstabilität bei gleichzeitiger hoher Querdynamik wird erfindungsgemäß vorgeschlagen, dass während Kurvenfahrten, bei denen an einem Rad ein verminderter Reifendruck vorliegt, bei der Kurvenfahrt (Links- oder Rechtskurve) die Querdynamik begrenzt wird, wenn das Reifen mit dem verminderten Reifendruck dem kurvenäußeren Rad zugeordnet ist.

Weiterhin ist es vorteilhaft, dass während einer Kurvenfahrt, bei der eine ABS Bremsung mit einer ABS Regelung erfolgt, die zu modifizierende Größe ein die Differenz zwischen der Fahrzeug-Referenzgeschwindigkeit und der Radumfangsgeschwindigkeit jeden Rades wiedergebender Wert (Schlupfwert) ist. Wenn bei der ABS Bremsung das Rad mit vermindertem Reifendruck ein Hinterrad ist, wird vorteilhaft die ABS Regelung nach dem SelectLow Prinzip durchgeführt.

Nach einer vorteilhaften Ausbildung ist vorgesehen, dass der Wert der Modifikation nach Maßgabe eines Kennfeldes, insbesondere in Form von Kennlinien, oder einer Formel berücksichtigt wird.

Die Stabilität des Fahrverhaltens wird ferner dadurch erhöht, dass nach Maßgabe des verminderten Reifendruckes und der Position und Anzahl der Räder mit vermindertem Reifendruck und /oder der Fahrsituation die Fahrgeschwindigkeit insbesondere nach Maßgabe einer Verringerung des Fahrzeugantriebsmoments reduziert wird.

Die Stabilität des Fahrverhaltens wird weiterhin dadurch erhöht, dass nach Maßgabe der Fehlergröße und der Position des Aktuators mit der Fehlergröße und der Anzahl der Aktuatoren, bei denen ein Fehler der Größe auftritt und Größen, die die Fahrsituation beschreiben, die Fahrgeschwindigkeit insbesondere nach Maßgabe einer Verringerung des Fahrzeugantriebsmoments reduziert wird.

Vorteilhafte Weiterbildungen sind in den Unteransprüchen angegeben.

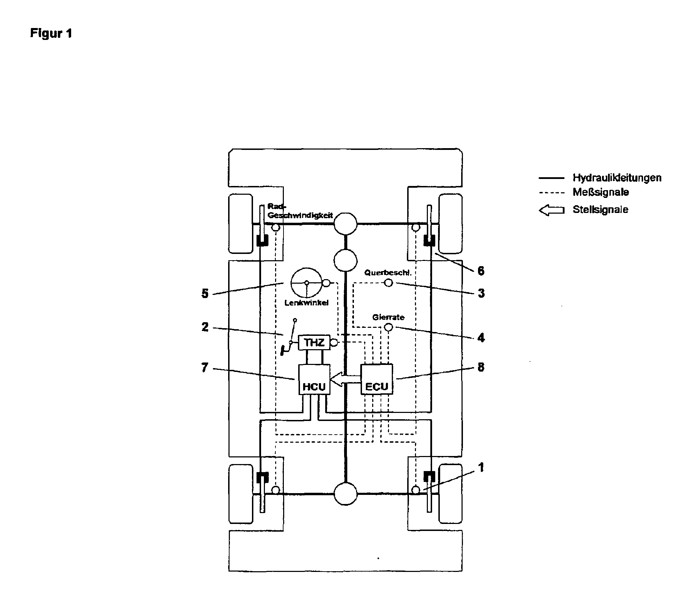

In der Zeichnung ist ein Fahrzeug mit Bremsregelsystem und ESP Sensorik schematisch dargestellt. Das Fahrzeug weist die typischen Elementen eines ESP-Systems auf:
vier Raddrehzahlsensoren (1)
THZ-Drucksensor (Fahrerbremswunsch) (2)
Querbeschleunigung LA (3)
Gierrate YR (4)
Lenkradwinkel SWA (5)
vier vom ESP individuell ansteuerbare Radbremsen (6)
Hydraulikeinheit zur Ansteuerung der Radbremsen (HCU) (7)
Fahrzeugrechnersystem (ECU) (8)

Darüber hinaus weist das Fahrzeug ein Reifendrucküberwachungssystem auf, das die Signale der vier Raddrehzahlsensoren auswertet. Selbstverständlich können auch in den Reifen angeordnete Sensoren diese Funktion übernehmen. Da derartige Systeme in ihrer Funktionsweise bekannt sind, bedarf es keiner näheren Beschreibung.

Dem erfindungsgemäßen Verfahren liegt die Erkenntnis zugrunde, dass bei einem Fahrzeug mit einem Reifen, dessen Reifendruck vermindert oder luftleer ist, in der Regel kein fahrdynamisch instabiles Fahrverhalten bei einer Geradeausfahrt auftritt, wenn im zuletzt genannten Fall z.B. ein Notlauf- bzw. Pannenlaufsystem, das im luftleeren Zustand das Weiterfahren sicherstellt, vorhanden ist. Wird jedoch mit diesem Fahrzeug eine Kurvenbahn durchfahren treten in Abhängigkeit von der Fahrgeschwindigkeit, der Fahrsituation (z.B. bei Kurvenbremsungen im ABS-, ASR-, ARB- oder ESP- Fall) durch die Reifen, bei denen der Reifendruck vermindert bis leer ist, Instabiltäten auf, die zu einem Fahrverhalten führen können, das vom Fahrer nicht erwartet wurde und nicht mehr beherrscht werden kann. Für solche Fälle sind Unterstützungssysteme vorgesehen, die das Fahrverhalten eines Fahrzeugs mittels vorgebbarer Drücke bzw. Bremskräfte in oder an einzelnen Radbremsen und mittels Eingriff in das Motormanagement des Antriebsmotors beeinflussen. Dabei handelt es sich um eine Bremsschlupfregelung (ABS), welche während eines Bremsvorgangs das Blockieren einzelner Räder verhindern soll, um eine Antriebsschlupfregelung (ASR), welche das Durchdrehen der angetriebenen Räder verhindert, um eine elektronische Bremskraftverteilung (EBV), welche das Verhältnis der Bremskräfte zwischen Vorder- und Hinterachse des Fahrzeugs regelt, um eine Kippregelung (ARP), die ein Kippen des Fahrzeugs um seine Längsachse verhindert, sowie um eine Giermomentregelung (ESP), welche für stabile Fahrzustände beim Gieren des Fahrzeugs um die Hochachse sorgt. Diese Systeme können den Fahrer bei fahrdynamisch kritischem Fahrverhalten des Fahrzeugs jedoch nur bedingt unterstützen, da bei vermindertem Reifendruck oder Fehlern des aktiven Fahrwerks, die durch das System eingesteuerten Bremsdrücke bzw. Bremskräfte nicht vollständig umgesetzt werden können bzw. die Eingriffsbedingungen durch den verminderten Reifendruck oder den fehlerhaften Aktuator des Fahrwerks derart beeinflusst werden können, dass sie modifizierte Regelstrategien erfordern, um einen fehlerfreien Betrieb zu gewährleisten.

Das Verfahren nach der Erfindung sieht daher vor, dass bei erkanntem Reifenluftdruckverlust die Systeme, insbesondere die ESP bzw. ARP Regelungsalgorithmen auf die sich verändernden Schräglaufsteifigkeiten angepasst werden. Die Anpassung erfolgt in Abhängigkeit des Rades, wo der Luftdruckverlust detektiert wurde. D.h. eine achs- und / oder seitenselektive Anpassung führt zu einem quasi "asymmetrischen" Einspurmodell, welches in eine Kurvenrichtung mehr Querdynamik zulässt wie in die andere Kurvenrichtung. Die Regelschwellen werden in dieser Situation ebenfalls richtungsabhängig reduziert.

Die ARP spezifischen Querbeschleunigungsschwellen, sowie die Einspurmodellbegrenzung werden entsprechend adaptiert.

Die ABS Regelschwellen werden in Richtung verminderter Längskraftübertragung verändert, wenn ein Querkraftbedarf entsteht (Kurvenbremsungen). Dies geschieht nur an dem Rad an dem der Luftdruckverlust erkannt wurde. Eine Längskraftreduktion ermöglicht die übertragung höherer Querkräfte. Tritt ein Luftdruckverlust an der Hinterachse auf werden aufgeweichte SelectLow Regelungen wieder auf 100% SelectLow geregelt, bei ebenfalls reduzierten Regelschwellen.

Der TCS/ARS Algorithmus kann ebenfalls in der gleichen Art und Weise modifiziert werden.

Das Maß der Adaption an die geänderte Fahrzeugcharakteristik ist abhängig von dem Maß des Druckluftverlustes und wird in Kennlinien softwareseitig abgelegt. Bei erheblichem Druckverlust ist die Begrenzung der Fahrgeschwindigkeit über das Motormanagement denkbar, um einerseits Reifenzerstörungen zu vermeiden aber andererseits ein Fahren zur nächsten Werkstatt zu ermöglichen.

## Patentansprüche

1. Verfahren zum Erhöhen der Stabilität des Fahrverhaltens eines fahrenden Fahrzeugs, mit den Schritten Überwachen eines in den einzelnen Reifen der Räder vorhandenen Reifendrucks,
Ermitteln des aktuellen Reifendruckverlusts,
Ermitteln der Position des Rades mit dem Reifendendruckverlust,
**gekennzeichnet durch** die weiteren Schritte Ermitteln oder Vorhersagen einer Kurvenfahrt,
Ermitteln oder Vorhersagen eines instabilen Fahrzustandes bei der Kurvenfahrt,
Modifizieren einer die Querdynamik des Fahrzeugs beeinflussenden Größe in Abhängigkeit von dem positionsindividuellen Reifendruckverlust, wenn ein instabiler Fahrzustand bei der Kurvenfahrt ermittelt oder vorhergesagt wird, und
Begrenzen der Querdynamik des fahrenden Fahrzeugs bei der Kurvenfahrt.

2. Verfahren nach Anspruch 1, **dadurch gekennzeichnet, dass** nach Maßgabe des Lenkwinkels, des Drehverhaltens der Räder und/oder des Gierwinkels ermittelt wird, an welchem Rad ein verminderter Reifendruck vorliegt.

3. Verfahren nach einem der Ansprüche 1 bis 2, **dadurch gekennzeichnet, dass** die die Querdynamik beeinflussende Größe ein ein aufzubringendes Zusatzgiermoment einer Fahrstabilitätsregelung beeinflussender Wert eines Einspurmodells ist.

4. Verfahren nach Anspruch 3, **dadurch gekennzeichnet, dass** der Wert der Reibwert ist, der nach Maßgabe des verminderten Reifendrucks begrenzt wird.

5. Verfahren nach einem der Ansprüche 1 bis 2, **dadurch gekennzeichnet, dass** die die Querdynamik beeinflussende Größe ein einen Fahrzustand mit kippkritischer Querbeschleunigung bestimmender Schwellenwert ist, bei dessen Überschreitung ein Kippen um eine in Längsrichtung des Fahrzeugs orientierte Fahrzeugachse erfolgt.

6. Verfahren nach Anspruch 5, **dadurch gekennzeichnet, dass** der Schwellenwert erniedrigt wird.

7. Verfahren nach einem der Ansprüche 1 bis 2 , **dadurch gekennzeichnet, dass** während einer Kurvenfahrt, bei der eine ABS Bremsung mit einer ABS Regelung erfolgt, die zu modifizierende Größe ein die Differenz zwischen der Fahrzeug-Referenzgeschwindigkeit und der Radumfangsgeschwindigkeit jeden Rades wiedergebender Wert (Schlupfwert) ist.

8. Verfahren nach Anspruch 7, **dadurch gekennzeichnet, dass** in dem Fall, wenn das Rad mit dem verminderten Reifendruck ein Hinterrad ist, die ABS Regelung nach dem SelectLow Prinzip durchgeführt wird.

9. Verfahren nach einem der Ansprüche 1 bis 5, **dadurch gekennzeichnet, dass** der Wert der Modifikation nach Maßgabe eines Kennfeldes, insbesondere in Form von Kennlinien, oder einer Formel berücksichtigt wird.

10. Verfahren nach einem der Ansprüche 1 bis 6, **dadurch gekennzeichnet, dass** nach Maßgabe des verminderten Reifendruckes und der Position des Reifens mit vermindertem Reifendruck und/oder der Anzahl der Räder mit Reifen mit vermindertem Reifendruck und Größen, die die Fahrsituation beschreiben, die Fahrgeschwindigkeit insbesondere nach Maßgabe einer Verringerung des Fahrzeugantriebsmoments reduziert wird.

## Claims

1. Method for increasing the stability of the driving behaviour of a moving vehicle, comprising the steps of monitoring a tyre pressure which is present in the individual tyres of the wheels,
ascertaining the current tyre pressure loss, ascertaining the position of the wheel exhibiting the tyre pressure loss,
**characterized by** the further steps of
ascertaining or predicting a cornering process, ascertaining or predicting an unstable driving state during the cornering process,
modifying a variable, which influences the lateral dynamics of the vehicle, as a function of the position-specific tyre pressure loss when an unstable driving state is ascertained or predicted during the cornering process, and
limiting the lateral dynamics of the moving vehicle during the cornering process.

2. Method according to Claim 1, **characterized in that** the wheel which exhibits a reduced tyre pressure is ascertained in accordance with the steering angle, the rotational behaviour of the wheels and/or the yaw angle.

3. Method according to either of Claims 1 and 2, **characterized in that** the variable which influences the lateral dynamics is a value of a single-track model, which value influences an additional yaw moment, which is to be applied, of a driving stability control system.

4. Method according to Claim 3, **characterized in that** the value is the friction value which is limited in accordance with the reduced tyre pressure.

5. Method according to either of Claims 1 and 2, **characterized in that** the variable which influences the lateral dynamics is a threshold value which determines a driving state with lateral acceleration which is critical in terms of tilting, the vehicle tilting about a vehicle axis which is oriented in the longitudinal direction of the vehicle when the said threshold value is exceeded.

6. Method according to Claim 5, **characterized in that** the threshold value is lowered.

7. Method according to either of Claims 1 and 2, **characterized in that** during cornering, in the case of which ABS braking is performed with an ABS control system, the variable which is to be modified is a value (slip value) which reflects the difference between the reference vehicle speed and the wheel circumferential speed of each wheel.

8. Method according to Claim 7, **characterized in that** if the wheel exhibiting the reduced tyre pressure is a rear wheel, the ABS control process is carried out in accordance with the select-low principle.

9. Method according to one of Claims 1 to 5, **characterized in that** the value of the modification is taken into account in accordance with a characteristic map, in particular in the form of characteristic curves, or a formula.

10. Method according to one of Claims 1 to 6, **characterized in that** the driving speed is reduced in accordance with the reduced tyre pressure and the position of the tyre exhibiting the reduced tyre pressure and/or the number of wheels with tyres exhibiting a reduced tyre pressure and variables which describe the driving situation, in particular in accordance with a reduction in the vehicle drive torque.

## Revendications

1. Procédé pour accroître la stabilité du comportement de conduite d'un véhicule en déplacement comprenant les étapes suivantes :
surveillance d'une pression de gonflage présente dans les pneus individuels des roues,
détermination des pertes de pression de gonflage de pneu actuelles,
détermination de la position de la roue avec les pertes de pression de gonflage de pneu,
**caractérisé par** les étapes supplémentaires :
détermination ou prévision d'une trajectoire en virage,
détermination ou prévision d'une situation de déplacement instable lors de la trajectoire en virage,
modification d'une grandeur qui influence la dynamique transversale du véhicule en fonction des pertes de pression de gonflage de pneu spécifiques à la position lorsqu'une situation de déplacement instable est déterminée ou prévue lors de la trajectoire en virage
et
limitation de la dynamique transversale du véhicule en déplacement lors de la trajectoire en virage.

2. Procédé selon la revendication 1, **caractérisé en ce que** la roue pour laquelle la pression de gonflage de pneu est réduite est déterminée d'après l'angle de direction, le comportement de rotation des roues et/ou l'angle de lacet.

3. Procédé selon l'une des revendications 1 à 2, **caractérisé en ce que** la grandeur qui influence la dynamique transversale est une valeur d'un modèle à voie unique qui influence un moment de lacet supplémentaire à appliquer d'un régulateur de stabilité de déplacement.

4. Procédé selon la revendication 3, **caractérisé en ce que** la valeur est la valeur de friction qui est limitée d'après la pression de gonflage de pneu réduite.

5. Procédé selon l'une des revendications 1 à 2, **caractérisé en ce que** la grandeur qui influence la dynamique transversale est une valeur de seuil qui détermine une situation de déplacement avec une accélération transversale critique au basculement dont le dépassement entraîne un basculement autour d'un axe de véhicule orienté dans le sens longitudinal du véhicule.

6. Procédé selon la revendication 5, **caractérisé en ce que** la valeur de seuil est diminuée.

7. Procédé selon l'une des revendications 1 à 2, **caractérisé en ce que** pendant une trajectoire en virage lors de laquelle a lieu un freinage ABS avec une régulation ABS, la grandeur à modifier est une valeur (valeur de glissement) qui restitue la différence entre la vitesse de référence du véhicule et la vitesse circonférentielle de roue de chaque roue.

8. Procédé selon la revendication 7, **caractérisé en ce que** dans le cas où la roue dont la pression de gonflage de pneu est réduite est une roue arrière, la régulation ABS est réalisée selon le principe dit « Select Low ».

9. Procédé selon l'une des revendications 1 à 5, **caractérisé en ce que** la valeur de la modification est prise en compte d'après un diagramme caractéristique, notamment sous la forme de courbes caractéristiques ou d'une formule.

10. Procédé selon l'une des revendications 1 à 6, **caractérisé en ce que** la vitesse de déplacement est réduite, d'après la pression de gonflage de pneu réduite et la position du pneu dont la pression de gonflage est réduite et/ou le nombre de roues ayant des pneus dont la pression de gonflage est réduite et les grandeurs qui décrivent la situation de déplacement, notamment d'après une diminution du couple d'entraînement du véhicule.
